# EUROPEAN PATENT SPECIFICATION

(11) **EP 2 066 746 B1**
(45) Date of publication and mention of the grant of the patent: **09.02.2011**
(21) Application number: 07814801.2
(22) Date of filing: 11.09.2007
(51) Int. Cl.: C08K 5/103, C08L 51/04, C08L 53/02, C08L 55/02

(54) **MONOVINYLIDENE AROMATIC POLYMERS CONTAINING NONFUNCTIONALIZED, NONMINERAL OIL**
AROMATISCHE MONOVINYLIDENPOLYMERE MIT NICHTFUNKTIONALISIERTEN NICHTMINERALISCHEN ÖLEN
POLYMÈRES AROMATIQUES DE MONOVINYLIDÈNE CONTENANT UNE HUILE NON-MINÉRALE ET NON-FONCTIONNALISÉE

(30) Priority: 20.09.2006 US 826269 P; 20.09.2006 US 826263 P
(43) Date of publication of application: 10.06.2009
(73) Proprietor: Styron Europe GmbH, 8810 Horgen (CH)
(72) Inventor: MONTOYA-GONI, Amaia, 4624 GN Bergen Op Zoom (NL); LYSENKO, Zenon, Midland, MI 48640 (US); SCHRADER, David, Midland, MI 48642 (US); CHAMBARD, Gregory, 1400 Nivelles (BE); SCHROCK, Alan K., Lake Jackson, TX 77566 (US)
(74) Representative: Grünecker, Kinkeldey, Stockmair & Schwanhäusser Anwaltssozietät
(86) International application number: PCT/US2007/078149
(87) International publication number: WO 2008/036530

(56) References cited:
- WO-A-01/48043
- US-A- 2 485 592
- US-A- 3 438 971
- US-A1- 2005 131 127
- US-A1- 2006 121 170
- US-B1- 6 673 857

## Description

### FIELD OF THE INVENTION

This invention relates to monovinylidene aromatic polymers. In one aspect, the invention relates to a composition of a monovinylidene aromatic polymer and a plasticizer comprising a mineral oil and a nonfunctionalized, nonmineral oil.

### BACKGROUND OF THE INVENTION

Monovinylidene aromatic polymers, including homopolymers such as general purpose polystyrene (GPPS), and copolymers, both with and without rubber, such as high impact polystyrene (HIPS), acrylonitrile-butadiene-styrene (ABS) and styrene- acrylonitrile (SAN), provide a cost effective range of physical properties that can be balanced to suit numerous applications. These types of polymers are frequently used in food and drink containers, packaging, consumer electronics, appliances and the like, and they can be produced by a variety of methods including molding and thermoforming from sheet material. For use in these applications, such polymers often require a balance of properties including good impact and heat resistance, flow and tensile strength and, depending upon the application, optics.

Virtually all bulk polymers contain one or more additives for at least one of two purposes, i.e., to alter the properties of the polymer and to enhance the processability of the polymer. Those additives that alter the properties of the polymer include everything from pigments and fragrances used for aesthetic reasons to plasticizers for modifying mechanical properties. Those additives that enhance processability include everything from lubricants to prevent the polymer from sticking to process equipment, to compounds that alter the chemical structure of the polymer, e.g., crosslinking agents.

Some additives, e.g., plasticizers, can serve both purposes. They can increase the flexibility of the finished product, and they can reduce the melt viscosity of the bulk polymer to facilitate molding or extrusion. Various criteria are used in selecting a plasticizer for a given application, and among these are cost, compatibility, stability, processability and permanence and/or biogradability.

The plasticizer of choice for use with monovinylidene aromatic polymers has been mineral oil. Used in appropriate amounts, mineral oil provides improvement to the bulk polymer in terms of, among other things, flow. However, mineral oil as a petroleum product continues to rise in expense, and cost-effective substitutes are of continuing interest to the industry, particularly substitutes that will provide the same or better benefits as mineral oil but at lower usage levels.

Selected vegetable oils have been identified as one possible class of such substitutes. USP 3,438.971 teaches the use of certain vegetable oils as "flexicizers" for monovinylidene aromatic hydrocarbon/unsaturated nitrile interpolymers blended with diene rubber. These oils are taught as preferably admixed with the interpolymer and rubber during extrusion blending, but the oil can also be added to the reaction mixture during the copolymerization of the styrene-acrylonitrile type monomers. These oils, however, have high (greater than 120) iodine and/or high (greater than 20) hydroxyl numbers. These high numbers, in turn, limit the ability to admix these oils with the interpolymer and rubber during polymerization (e.g., the unsaturation and hydroxyl functionalities can interfere with the polymerization) and, as such, limit the ability of homogeneously admixing these oils with the interpolymer and rubber. Better homogeneous mixing is achieved if the oil, mineral or vegetable, is added to the monomers and rubber prior to or just after the start of polymerization than if it is added to the reaction mixture once the polymerization reaction is well established or after the polymerization reaction is completed. In the latter scenarios, the oil tends to remain in the interpolymer phase, i.e.. it tends not to partition into the rubber phase. This is particularly true with blends of rubber and high (e.g., greater than 200,000) weight average molecular weight (Mw) interpolymers.

USP 2,485,592 describes molding compositions comprising thermoplastic vinyl aromatic resins combined with polyhydric alcohol esters as flow agents. WO 2001/48043 (Bayer Corp.) describes incorporation of unsaturated triglycerides in ABS polymers.

### SUMMARY OF THE INTENTION

In one embodiment the invention is a composition comprising (A) a monovinylidene aromatic polymer, and (B) at least 0.1 weight percent (wt %), based on the weight of the monovinylidene aromatic polymer, of a plasticizer comprising mineral oil and a nonfunctionalized, nonmineral oil having (1) an iodine value less than 120, and (2) a hydroxyl number, expressed in milligrams of potassium hydroxide that is chemically equivalent to the activity of a specified weight in grams of the oil, of less than 20. This number reflects the amount of hydroxyl-bearing mono-, di- and triglycerides in the oil as either in a hydrolyzed oil or as in castor oil. The plasticizer contains less than 0.1 weight percent (based on the polymer) of functionalized non mineral oil.

The composition is typically and preferably free of any significant amount of functionalized, nonmineral oil. The plasticizers of this invention are preferably admixed with the monomer or monomers from which the monovinylidene aromatic polymer is made, and are particularly well suited for plasticizing high (e.g., greater than 250,000) Mw monovinylidene aromatic polymers, with or without rubber.

Compositions of monovinylidene aromatic polymers and a plasticizer comprising a nonfunctionalized, nonmineral oil, with a mineral oil, typically exhibit the same melt flow rate (MFR) and a higher Vicat heat distortion temperature as similar compositions containing twice as much plasticizer of only or mostly mineral oil, i.e., without any or with only a minor amount of nonfunctionalized, nonmineral oil. Monovinylidene aromatic polymers mixed with a plasticizer of this invention also typically exhibit the same elongation at culture and a higher tensile strength than do similar polymers mixed with twice as much of a traditional plasticizer, e.g., Mineral oil.

### DESCRIPTION OF THE PREFERRED EMBODIMENTS

"Mineral oil" means oil derived principally from petroleum, typically from the distillation of petroleum to produce gasoline. Typically, Mineral oil is a mixture that contains a large number, e.g., hundreds, of different kinds of hydrocarbons, mainly alkanes and cyclic paraffins, and it is liquid at ambient conditions.

"Nonmineral oil" means one or more of vegetable and animal oil. For purposes of this invention, nonmineral oil typically (A) is a liquid at 45°C and atmospheric pressure, (B) has an iodine value less than 120, preferably less than 115 and more preferably less than 110, and typically greater than zero, more typically at least 20, even more typically at least 30, still more typically at least 40, yet more typically at least 50, preferably at least 60, more preferably of at least 70 and even more preferably at least 75, and (C) and has a hydroxyl number less than 20, preferably less than 15, more preferably less than 10 and even more preferably less than 5, but typically greater than zero. The nonmineral oils of this invention do not include essential oils.

"Vegetable oil" means oil derived principally from plants, particularly the seeds and nuts of plants, and comprised largely of glycerides of the fatty acids, e.g., oleic, palmitic, stearic and linolenic.

"Animal oil" means oil derived principally from animals, and those liquid under ambient conditions include fish oils, fish-liver oils, sperm oil. Animal oils typically have high fatty acid content.

"Essential oil" means oil derived principally from flowers, stems and leaves. These oils are complex, volatile liquids, typically contain terpenes, and contain relatively little, if any, glycerides of the fatty acids.

"Nonfunctionalized, nonmineral oil" means a vegetable and/or animal oil that has not been modified with one or more constituents or functional groups, e.g., nitrates, phosphates, sulfates, epoxies, etc., that would react or otherwise interfere with the manufacturing, processing and/or performance of the monovinylidene aromatic polymer for its intended purpose. Nonfunctionalized, nonmineral oils include, however, nonmineral oils that have been subjected to hydrogenation to one extent or another.

"Bulk polymer", "polymer resin" and like terms means polymer molecules in the aggregate as opposed to individual polymer molecules. The physical properties of polymers, e.g., melt flow rate, tensile strength, Vicat heat distortion temperature, etc., are measurements of the bulk polymer. Additives are added to and influence the properties of the bulk polymer.

"Plasticizer blend" and similar terms mean a blend comprising less than 50 but more than 0.1 wt% of at least one mineral oil and 50 or more but less than 99.9 wt% of at least one nonfunctionalized, nonmineral oil. The blends are liquid at ambient conditions although they may contain one or more components that are not liquid at ambient conditions but are soluble at ambient conditions in one or more of the other components of the blend, e.g., palm oil soluble in mineral oil. Preferably the plasticizer blends contain at least about 1, more preferably at least 5, more preferably at least 15, more preferably at least 20, and even more preferably at least 25, wt% mineral oil, but preferably less than 45, more preferably less than 40 and even more preferably less than 35, wt% mineral oil.

"Free of any significant amount" means less than 0.1 weight percent based on the weight of the monovinylidene aromatic polymer.

"High oleic oil" and similar terms mean oil, e.g., a vegetable oil such as sunflower oil, with a sufficient oleic acid content to impart an iodine number to the oil from greater than zero to less than 120.

The numerical ranges in this disclosure are approximate, and thus may include values outside of the range unless otherwise indicated. Numerical ranges include all values from and including the lower and the upper values; in increments of one unit, provided that there is a separation of at least two units between any lower value and any higher value. As an example, if a compositional, physical or other property, such as, for example, molecular weight, viscosity, melt index, *etc.,* is from 100 to 1,000, it is intended that all individual values, such as 100, 101, 102, *etc.,* and sub ranges, such as 100 to 144, 155 to 170, 197 to 200, *etc.,* are expressly enumerated. For ranges containing values that are less than one or containing fractional numbers greater than one (e.g., 1.1, 1.5, *etc.*)*,* one unit is considered to be 0.0001, 0.001, 0.01 or 0.1, as appropriate. For ranges containing single digit numbers less than ten (*e.g*., 1 two 5), one unit is typically considered to be 0.1. These are only examples of what is specifically intended, and all possible combinations of numerical values between the lowest value and the highest value enumerated, are to be considered to be expressly stated in this disclosure. Numerical ranges are provided within this disclosure for, among other things, the iodine value and hydroxy number of the nonfunctionalized, nonmineral oil, the relative amounts of mineral oil and nonmineral oil in a plasticizer blend, molecular weights and the like.

Monovinylidene aromatic homopolymers and copolymers (individually and collectively referred to as "polymers" or "copolymers") are produced by polymerizing monovinylidene aromatic monomers such as those described in USP 4,666,987, 4,572,819 and 4,585,825. The monovinylidene aromatic monomers suitable for producing the polymers and copolymers used in the practice of this invention are preferably of the following formula: 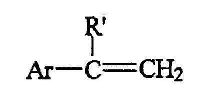 in which R' is hydrogen or methyl, Ar is an aromatic ring structure having from 1 to 3 aromatic rings with or without alkyl, halo, or haloalkyl substitution, wherein any alkyl group contains 1 to 6 carbon atoms and haloalkyl refers to a halo substituted alkyl groups Preferably, Ar is phenyl or alkylphenyl (in which the alkyl group of the phenyl ring contains 1 to 10, preferably 1 to 8 and more preferably 1 to 4, carbon atoms), with phenyl being most preferred. Typical monovinylidene aromatic monomers which can be used include: styrene, alpha-methylstyrene, all isomers of vinyl toluene, especially para-vinyltoluene, all isomers of ethyl styrene, propyl styrene, vinyl biphenyl, vinyl naphthalene, vinyl anthracene and the like, and mixtures thereof with styrene being the most preferred.

The monovinylidene aromatic monomer can be copolymerized with one or more of a range of other copolymerizable monomers. Preferred comonomers include nitrile monomers such as acrylonitrile, methacrylonitrile and fumaronitrile; (meth)acrylate monomers such as methyl methacrylate or n-butyl acrylate; maleic anhydride and/or N-arylmaleimides such as N-phenylmaleimide, and conjugated and nonconjugated dienes. Representative copolymers include acrylonitrile-butadiene-styrene (ABS) and styrene-acrylonitrile (SAN) copolymers. The copolymers typically contain at least 1, preferably at least 2 and more preferably at least 5, wt% of units derived from the comonomer based on weight of the copolymer. Typically, the maximum amount of units derived from the comonomer is 40, preferably 35 and more preferably 30, wt % based on the weight of the copolymer.

The weight average molecular weight (Mw) of the monovinylidene aromatic polymers used in the practice of this invention can vary widely. For reasons of mechanical strength, among others, typically the Mw is at least 100,000, preferably at least 120,000, more preferably at least 130,000 and most preferably at least 140,000 g/mol. For reasons of processability, among others, typically the Mw is less than or equal to 400,000, preferably less than or equal to 350,000, more preferably less than or equal to 300,000 and most preferably less than or equal to 250,000 g/mol. The nonfunctionalized, nonmineral oils of this invention are particularly well suited for plasticizing monovinylidene aromatic polymers with a Mw above 250,000, or above 300,000, or above 3 50,000. For monovinylidene aromatic polymers of these high Mw, the nonfunctionalized, nonmineral oils of this invention are preferably added to the monomers and/or rubber from which the monovinylidene aromatic polymer is made.

Similar to the Mw, the number average molecular weight (Mn) of the monovinylidene aromatic polymers used in the practice of this invention can also vary widely. Again for reasons of mechanical strength, among others, typically the Mn is at least 30,000, preferably at least 40,000, more preferably at least 50,000 and most preferably at least 60,000 g/mol. Also for reasons of processability, among others, typically the Mn is less than or equal to 130,000, preferably less than or equal to about 120,000, more preferably less than or equal to 110,000 and most preferably less than or equal to 100,000 g/mol.

Along with the Mw and Mn values, the ratio of Mw/Mn, also known as polydispersity or molecular weight distribution, can vary widely. Typically, this ratio is at least 2, and preferably greater than or equal to 2.3. The ratio typically is less than or equal to 4, and preferably less than or equal to 3. The Mw and Mn are typically determined by gel permeation chromatography using a polystyrene standard for calibration.

The monovinylidene aromatic polymers and copolymers used in the practice of this invention can be blended or grafted with one or more rubbers to form a high impact monovinylidene aromatic polymer or copolymer, e.g., GPPS blended with a rubber, HIPS, ABS, etc. The rubber can be any unsaturated rubbery polymer having a glass transition temperature (Tg) of not higher than 0°C, preferably not higher than -20°C, as determined by ASTM D-756-52T. Tg is the temperature or temperature range at which a polymeric material shows an abrupt change in its physical properties, including, for example, mechanical strength. Tg can be determined by differential scanning calorimetry (DSC).

The rubbers suitable for use in the present invention are those that have a solution viscosity in the range of 5 to 300 centipoise (cps, 5 percent by weight styrene at 20C) and Mooney viscosity of 5 to 100 (ML+1, 100°C). Suitable rubbers include, but are not limited to, diene rubbers, diene block rubbers, butyl rubbers, ethylene propylene rubbers, ethylenepropylene-diene monomer (EPDM) rubbers, ethylene copolymer rubbers, acrylate rubbers, polyisoprene rubbers, halogen-containing rubbers, silicone rubbers and mixtures of two or more of these rubbers. Also suitable are interpolymers of rubber-forming monomers with other copolymerizable monomers. Suitable diene rubbers include, but are not limited to, conjugated 1,3-dienes, for example, butadiene, isoprene, piperylene, chloroprene, or mixtures of two or more of these dienes. Suitable rubbers also include homopolymers of conjugated 1,3-dienes and interpolymers of conjugated 1,3-dienes with one or more copolymerizable monoethylenically unsaturated monomers, for example, copolymers of isobutylene and isoprene.

Preferred rubbers are diene rubbers such as polybutadiene, polyisoprene, polypiperylene, polychloroprene, or mixtures of diene rubbers, i.e., any rubbery polymers of one or more conjugated 1,3-dienes, with 1,3-butadiene being especially preferred. Such rubbers include homopolymers and copolymers of 1,3-butadiene with one or more copolymerizable monomers, such as monovinylidene aromatic monomers as described above, styrene being preferred. Preferred copolymers of 1,3-butadiene are block or tapered block rubbers of at least 30, more preferably at least 50, even more preferably at least 70, and still more preferably at least 90, wt% 1,3-butadiene rubber, and preferably up to 70, more preferably up to 50, even more preferably up to 30, and still more preferably up to 10, wt % monovinylidene aromatic monomer, all weights based on the weight of the 1,3-butadiene copolymer.

The amount of rubber in the rubber-modified polymers of this invention can vary widely, and is often a function of the polymer which it is modifying. For example, the rubber in ABS is typically present in an amount equal to or less than 40, preferably equal to or less than 30, more preferably equal to or less than 25, even more preferably equal to or less than 20, and most preferably equal to or less than 18 wt % based on the weight of the rubber-modified polymer. For HIPS, the rubber is typically present in an amount equal to or less than 20, preferably equal to or less than 15 and more preferably equal to or less than 10, wt % based on the weight of the rubber-modified polymer.

Any nonfunctionalized, nonmineral oil with the requisite iodine and hydroxyl numbers can be used in the practice of this invention. These oils typically include such vegetable oils as those derived from peanuts, cottonseed, olives, rapeseed, high-oleic sunflower, palm and corn , but typically do not include oils derived from coconuts, linseed, tung, oiticica, safflower, soybean and castor bean. However, these less preferred oils can perform well in this invention if subjected to one or more treatments, e.g., hydrogenation, that ensure an iodine value less than 120 and a hydroxyl number of less than 20. These oils also include animal oils that are liquid at 45°C and atmospheric pressure, such as some fish oils, sperm oil and fish-liver oils, and can include lard, beef tallow and butter. These oils can be used alone or in combination with one or more other mineral or nonmineral oils. In one embodiment, the nonfunctional, nonmineral oils are used in the absence of any significant amount of functionalized nonmineral oil, preferably in the near or complete absence of any such other functionalized nonmineral oil. In other embodiments, the nonfunctional, nonmineral oils are used as a component of a plasticizer blend. Animal oils not liquid at 45°C and atmospheric pressure are disfavored for use in this invention. Nonfunctionalized vegetable oils, such as palm, cottonseed, peanut, olive and canola oil, are the preferred nonfunctionalized nonmineral oils for use in the practice of this invention.

The nonfunctionalized, nonmineral oils are commercially available from a variety of different sources, and can be prepared by a variety of different methods, e.g., solvent extraction, physical extraction (e.g.; crushing, expeller-pressed, etc.), and supercritical carbon dioxide extraction. Other than standard purification treatments and perhaps hydrogenation, the oils are not functionalized and, preferably, not otherwise modified.

The iodine number or value is expressed as grams of ionized iodine per 100 grams of sample, or I/100g sample, and it is measured according to ASTM D5554-95 (Re-approved 2001) substituting a 50/50 by volume mixture of cyclohexane and acetic acid for the carbon tetrachloride and auto-titration. The hydroxyl number or value is expressed in milligrams of potassium hydroxide that is chemically equivalent to the activity of a specified weight in grams of the oil, and it is measured according to ASTM E-1899-02. The hydroxyl number is exclusive of any increase due to the presence of water as an impurity or contaminant in the oil.

The amount of plasticizer used in the compositions of this invention can vary widely, but typically the amount of such plasticizer in the composition is at least 0.1, preferably at least 0.5 and more preferably at least 1, wt % based on the total weight of the polymer. The only limits on the maximum amount of such a plasticizer in the compositions of this invention are those set by cost and practical considerations, but typically the maximum amount of plasticizer in these compositions does not exceed 10, preferably 5 and more preferably 3, wt % based on the total weight of the polymer.

The plasticizers used in the practice of this invention are used in the same manner as the known plasticizers, e.g., minerals oils, functionalized nonmineral oils, etc. These plasticizers can be added before and/or after the formation of the monovinylidene polymers. In one preferred embodiment, the plasticizer is added as part of the bulk reaction mixture, either prior to or just after the start of polymerization (e.g., within a few minutes of the start of polymerization), from which the monovinylidene polymer is made, without or without rubber, to promote thorough distribution of the oil throughout the polymer.

Typically less nonfunctionalized, nonmineral oil is required to achieve the same effect as is necessary with a mineral oil. For example, one percent by weight of a vegetable oil of this invention in high impact polystyrene can produce the same MFR as two and half percent by weight of a mineral oil and still have a higher Vicat heat distortion temperature and tensile strength. In addition, the vegetable oils of this invention have a lower volatility than mineral oils which typically means that less vegetable oil is lost due to volatilization than mineral oil under similar conditions. This can also mean less die drip problems during fabrication of the monovinylidene aromatic polymer into various articles of manufacture.

The compositions of this invention can contain components other than the monovinylidene aromatic polymer and plasticizer comprising a nonfunctionalized, nonmineral oil, and these other components include anti-oxidants, colorants, lubricity agents, crosslinking agents. These other components are known in the art, and they are used in the same manner and amounts as they are used in known compositions of monovinylidene aromatic polymer and mineral oil.

The compositions of this invention can be used in the manufacture of various articles, including but not limited to, containers, packaging, components for consumer electronics and appliances. These compositions are used in the same manner as know compositions of monovinylidene aromatic polymers and mineral oil, e.g., extrusion, molding, thermoforming, etc.

The following examples are provided to illustrate various embodiments of the invention. They are not intended to limit the invention as otherwise described and claimed. All numerical values are approximate, and all parts and percentage are by weight unless otherwise indicated.

### SPECIFIC EMBODIMENTS

### Plasticizers Comprising a Single Vegetable Oil:

Representative plasticizers of this invention comprising a single vegetable oil (Examples 1-3) are compared with (i) white mineral oil (Comparative Example A), and (ii) soybean oil, a vegetable oil having an iodine value greater than 120 (Comparative Example B). High impact polystyrene (HIPS) is made by polymerizing styrene in the presence of rubber and the plasticizer in a 1.4-gram auger-type laboratory batch reactor fitted with heating elements and an agitator. The feed compositions are shown in Table 1. All values are expressed as wt% (or ppm) based on total feed. IRGANOX 1076 is octadecyl 3,5-di-(tert)-butyl-4-hydrocinnamate from Ciba Specialty Chemicals Corporation added as antioxidant. Mineral oil is DRAKENOL 600 from Penntico. TRIGONOX 22 is 1,1-bis (tert-butylperoxycyclohexane) from Akzo Nobel Polymer Chemicals. DIENE 55 is a polybutadiene rubber from FIRESTONE.

**Table 1**

| Experimental Compositions | | | | | |
|---|---|---|---|---|---|
| | Comparative Example A | Comparative Example B | Comparative Example 1 | Comparative Example 2 | Comparative Example 3 |
| Description | 2.5% Mineral Oil | 1% Soybean Oil | 1% Palm Stearine | 1% Canola Oil | 1% High Oleic Sunflower Oil |
| Iodine number | n/m | 128 | 28.7 | 102 | 86 |
| % Ethyl Benzene (EB) | 15.01 | 15.01 | 15 | 15 | 15 |
| % IRGANOX 1076 | 0.14 | 0.14 | 0.14 | 0.14 | 0.14 |
| % Nonmineral Oil | 0 | 0.8 | 0.8 | 0.8 | 0.8 |
| % Mineral Oil | 1.99 | 0 | 0 | 0 | 0 |
| % DIENE 55 | 5.26 | 5.26 | 5.25 | 5.26 | 5.25 |
| TRIGONOX 22 (ppm) | 299 | 300 | 300 | 300 | 300 |
| Styrene | balance | balance | balance | balance | balance |

| | | | | | |
|---|---|---|---|---|---|
| n/m = not measured. | | | | | |

The feed is charged into the reactor, and the reactor has a temperature and agitation polymerization profile as shown in Table 2.

**Table 2**

| Reactor Conditions for Laboratory Batch Reactor | | | |
|---|---|---|---|
| STEP | SETPOINT (°C) | TIME (hours:minutes) | AGITATION (rpm) |
| 0 | 25 | | |
| 1 | 98 | 0:50 | 75 |
| 2 | 115 | 0:50 | 75 |
| 3 | 122 | 0:50 | 40 |
| 4 | 130 | 1:20 | 40 |
| 5 | 141 | 1:00 | 25 |
| 6 | 155 | 1:00 | 25 |
| 7 | 170 | 1:00 | 25 |

At the end of this profile, the polymerization syrup is de-volatilized in a vacuum oven at 240°C for approximately 1 hour. The polymer is then ground and extruded into granules, and the chemical and physical properties of the final product are then measured.

Molar mass is measured using gel permeation chromatography based on polystyrene standards. Rubber particle size (RPS) is measured with Coulter Counter equipment using a 30-micron tube. The mean, median and the mode are used to describe the distribution. Rubber content is measured using FTIR method.

Tensile testing is measured following ASTM D-638 on compression molded specimens. Flexural testing is measured following ASTM D 790 method on compression molded specimens. Izod impact resistance is measured on 0.125-inch thick compression molded specimens following ASTM-D256 method. Vicat softening temperature is measured according to ASTM-D1525, rate B. Melt flow rate is measured according to ASTM D1133, condition G (200°C/5Kg). The results are reported in Tables 3A and 3B.

**Table 3A**

| Chemical Properties of the Experimental Compositions | | | | | |
|---|---|---|---|---|---|
| | Comparative Example A | Comparative Example B | Comparative Example 1 | Comparative Example 2 | Comparative Example 3 |
| Description | 2.5% Mineral Oil | 1% Soybean Oil | 1% Palm Stearine | 1% Canola Oil | 1% High Oleic Sunflower Oil |
| Final Mw (g/mole) | 213775 | 209300 | 193300 | 215300 | 221000 |
| Final Mn (g/mole) | 90839 | 89600 | 85700 | 90400 | 91400 |
| Mw/Mn | 2.35 | 2.34 | 2.26 | 2.38 | 2.42 |
| RPS Mean (micron) | 1.40 | 1.67 | 1.87 | 1.52 | 1.64 |
| RPS Median (micron) | 1.41 | 1.64 | 1.92 | 1.55 | 1.68 |
| RPS Mode (micron) | 1.50 | 1.98 | 2.21 | 1.67 | 1.67 |
| % Rubber in final product | 6.65 | 6.55 | 6.78 | 6.83 | 6.49 |

**Table 3B**

| Physical Properties of the Experimental Compositions | | | | | |
|---|---|---|---|---|---|
| | Comparative Example A | Comparative Example B | Comparative Example 1 | Comparative Example 2 | Comparative Example 3 |
| Description | 2.5% Mineral Oil | 1% Soybean Oil | 1% Palm stearine | 1% Canola Oil | 1% High Oleic Sunflower Oil |
| Tensile yield (psi) | 2800 | 3015 | 2941 | 3205 | 3067 |
| Tensile rupture (psi) | 2050 | 2147 | 2205 | 2240 | 2333 |
| Tensile modulus (10^5 psi) | 2.56 | 2.55 | 2.59 | 2.64 | 2.58 |
| Flexural strength, (psi) | 5150 | 5150 | 5335 | 5464 | 5382 |
| Flexural modulus. (psi) | 267000 | 265800 | 264700 | 280900 | 283700 |
| Izod (ft lb/in) | 2.5 | 2.1 | 2.00 | 2.2 | 2.2 |
| Vicat (°F) [°C] | 215 [102] | 218 [103] | 218 (103) | 219 [104] | 218[103] |
| Melt Flow Rate (g/10 min) | 2.66 | 2.78 | 3.29 | 2.49 | 2.30 |

| | | | | | |
|---|---|---|---|---|---|
| 1000 psi = 6.8948 MPa | | | | | |

With less than half the amount of mineral oil, the palm stearine, canola and high oleic sunflower oils arc able to produce a comparable MFR and a comparable VICAT softening point. In addition the tensile yield is improved.

### Plasticizer Blend:

A mixture or palm stearine oil, a vegetable oil with an iodine value of 28.7, and white mineral oil (Example 4) is compared to a plasticizer comprising only mineral oil (Comparative Example C) and a plasticizer comprising only the palm stearine oil (Example 5). High impact polystyrene (HIPS) is made in the same manner and using the same ingredients as described above except that a mini-plant reactor is used in place of the laboratory batch reactor. The mini-plant set-up consists of three stirred tank reactors in series with each tank divided into three temperature zones for a total of nine temperature zones. The experimental compositions are described in fable 4, and the temperature and agitation polymerization profile or the reactor are described in Table 5. At the end of this profile, the polymerization syrup is de-volatilized in a devolatilizing extruder at 240°C and the final product is extruded into granules. The chemical and physical properties of the final product are measured using the same techniques as described above, and the results are reported in Tables 6A and 6B.

**Table 4**

| Experimental Compositions | | | |
|---|---|---|---|
| | Comparative Example C | Example 4 | Comparative Example 5 |
| Description | 3.5% Mineral Oil | 0.65% Mineral oil + 2.0% Palm Stearin | 2.65% Palm Stearine |
| Iodine number | n/m | n/m | 28.7 |
| % Ethyl Benzene (EB) | 8.5 | 8.5 | 9.5 |
| % IRGANOX 1076 | 0.05 | 0.05 | 0.05 |
| % Nonmineral Oil | 0 | 1.5 | 2.0 |
| % Mineral Oil | 3.5 | 0.50 | 0 |
| % DIENE 55 | 5.4 | 5.4 | 5.4 |
| TRIGONOX 22 (ppm) | 0 | 0 | 0 |
| Styrene | balance | balance | balance |

**Table 5**

| Reactor Conditions for Mini Plant | | | |
|---|---|---|---|
| ZONE | SETPOINT (°C) | TIME (hours:minutes) | AGITATION (rpm) |
| 1 | 128.0 | 0:35 | 175 |
| 2 | 135.0 | 0:35 | 175 |
| 3 | 140.0 | 0:35 | 175 |
| 4 | 144.0 | 0:35 | 70 |
| 5 | 149.1 | 0:35 | 70 |
| 6 | 158.0 | 0:35 | 70 |
| 7 | 162.9 | 0:35 | 25 |
| 8 | 168.0 | 0:35 | 25 |
| 9 | 122.0 | 0:35 | 25 |

**Table 6A**

| Chemical Properties of the Mini-Plant Experimental Compositions | | | |
|---|---|---|---|
| | Comparative Example C | Example 4 | Comparative Example 1 |
| Description | 3.5% Mineral Oil | 0.65% Mineral oil + 2.0% Palm Stearin | 2.65% Palm Stearine |
| Final Mw (g/mole) | 147100 | 149000 | 143600 |
| Final Man (g/mole) | 63200 | 59800 | 58500 |
| Mw/Mn | 2.33 | 2.49 | 2.45 |
| RPS Mean (micron) | 2.73 | 2.93 | 3.64 |
| RPS Median (micron) | 2.86 | 3.16 | 4.17 |
| RPS Mode (micron) | 3.64 | 4.06 | 6.33 |
| % Rubber in final product | 7.46 | 7.10 | 6.60 |

**Table 6B**

| Physical Properties of the Mini-Plant Experimental Compositions | | | |
|---|---|---|---|
| | Comparative Example C | Example 4 | Comparative Example 5 |
| Description | 3.5% Mineral Oil | 0.65% Mineral oil + 2.0% Palm Stearin | 2.65% Palm Stearine |
| Tensile yield (MPa) | 18.7 | 18.8 | 17.7 |
| Tensile rupture (MPa) | 19.5 | 20. 1 | 18.9 |
| Tensile modulus (MPa) | 1897 | 1903 | 1793 |
| Izod (ft lb/in) | 2.1 | 2.0 | 1.9 |
| Vicat (°C) | 98 | 98.6 | 97.8 |
| Melt Flow Rate (g/10 min) | 12.30 | 11.24 | 13.3 |

Consistent with the results reported from the laboratory batch reactor, with only about 75 percent as much plasticizer as used in the Comparative Example C, the products of Examples 4 and 5 reported comparable tensile and impact numbers, and comparable Vicat and MFR values.

Although the invention has been described in considerable detail by the preceding examples, this detail is for the purpose of illustration and is not to be construed as a limitation on the scope of the invention as described in the pending claims.

## Claims

1. A composition comprising:
(i) a monovinylidene aromatic polymer,
(ii) at least 0.1 weight percent, based on the weight of the polymer, of a plasticizer comprising mineral oil and a nonfunctionalized, nonmineral oil having an iodine value less than 120 and a hydroxyl number of less than 20, wherein the the plasticizer contains less than 0.1 weight percent (based on the polymer) of functionalized nonmineral oil.

2. The composition of Claim 1 in which the nonfunctionalized nonmineral oil is present in an amount of at least 0.5 weight percent based upon the weight of the polymer.

3. The composition of Claim 1 in which the nonmineral oil has an iodine value between 20 and 115.

4. The composition of Claim in which the nonmineral oil comprises a vegetable oil.

5. The composition of Claim 1 in which the nonmineral oil comprises 50 or more wt% of the plasticizer.

6. The composition of claim 4 in which the vegetable oil comprises oil derived from at least one of peanuts, cottonseed, olives, rapeseed, high-oleic sunflower, palm and corn.

7. The composition of Claim 1 in which the polymer comprises units derived from a monovinylidene aromatic monomer of the formula: 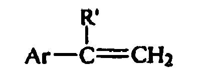 in which R' is hydrogen or methyl, and Ar is an aromatic ring structure having from 1 to 3 aromatic rings.

8. The composition of Claim 7 in which Ar is phenyl or alkylphenyl, and the alkyl group of the phenyl ring contains 1 to 10 carbon atoms.

9. The composition of Claim 8 in which the alkyl group of the phenyl ring contains 1 to 4 carbon atoms.

10. The composition of Claim 1 in which the monovinylidene aromatic polymer is blended or grafted with at least one rubber.

11. The composition of Claim 10 in which the rubber has a glass transition temperature of not greater than 0°C.

12. The composition of Claim 10 in which the rubber is selected from the group consisting of diene rubbers, diene block rubbers, butyl rubbers, ethylene propylene rubbers, ethylenepropylene-diene monomer rubbers, ethylene copolymer rubbers, acrylate rubbers, polyisoprene rubbers, halogen-containing rubbers and silicone rubbers.

13. The composition of Claim 10 in which the rubber is present in an amount of less than 40 weight percent based upon the weight of the polymer.

14. The composition of Claim 7 in which the polymer is general purpose polystyrene.

15. The composition of Claim 10 in which the polymer is high impact polystyrene.

16. The composition of Claim 10 in which the polymer is ABS.

17. The composition of Claim 7 in which the polymer is SAN.

18. An article prepared from the composition of Claim 1.

19. The article of Claim 19 formed from extrusion, molding or thermoforming.

20. The composition of Claim 1 formed by polymerizing monovinylidene aromatic monomers in the presence of a plasticizer comprising the nonfunctional, nonmineral oil.

## Patentansprüche

1. Zusammensetzung enthaltend:
(I) ein aromatisches Monovinylidenpolymer,
(II) mindestens 0,1 Gew.-%, bezogen auf das Gewicht des Polymers, eines Weichmachers, der Mineralöl und ein nichtfunktionalisiertes nichtmlneralisches Öl mit einer Iodzahl von weniger als 120 und einer Hydroxylzahl von weniger als 20 enthält, wobei der Welchmacher weniger als 0,1 Gew.-% (bezogen auf das Polymer) von funktionallsiertem nichtmlnerallschem Öl enthält.

2. Zusammensetzung nach Anspruch 1, In welcher das nichtfunktionalisierte nichtmineralische Öl In einer Menge von mindestens 0,5 Gew.-%, bezogen auf das Gewicht des Polymers, vorhanden ist.

3. Zusammensetzung nach Anspruch 1, in welcher das nichtmineralische Öl eine Iodzahl zwischen 20 und 115 aufweist.

4. Zusammensetzung nach Anspruch 1, in welcher das nichtmineralische Öl ein Pflanzenöl enthäft.

5. Zusammensetzung nach Anspruch 1, in welcher das nichtmlneralische Öl 50 oder mehr Gewichtsprozent des Welchmachers enthält.

6. Zusammensetzung nach Anspruch 4, in welcher das Pflanzenöl Öl enthält, das aus mindestens einem von Erdnüssen, Baumwollsamen, Oliven, Rapssamen, Sonnenblumen mit hohem Ölsäuregehalt, Palme und Mais gewonnen ist.

7. Zusammensetzung nach Anspruch 1, In welcher das Polymer Einheiten enthält, die sich von einem aromatischen Monovinylidenmonomer der Formel 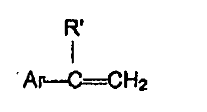 ableiten, In welcher R' ein Wasserstoff oder Methyl ist und Ar eine aromatische Ringstruktur mit 1 bis 3 aromatischen Ringen ist.

8. Zusammensetzung nach Anspruch 7, in welcher Ar gleich Phenyl oder Alkylphenyl Ist und die Alkylgruppe des Phenylrings 1 bis 10 Kohlenstoffatome enthält.

9. Zusammensetzung nach Anspruch 8, In welcher die Alkylgruppe des Phenylrings 1 bis 4 Kohlenstoffatome enthält.

10. Zusammensetzung nach Anspruch 1, in welcher das aromatische Monovinylldenpolymer mit mindestens einem Kautschuk vermischt oder gepfropft ist.

11. Zusammensetzung nach Anspruch 10, in welcher der Kautschuk eine Glasübergangstemperatur von nicht größer als 0°C aufweist.

12. Zusammensetzung nach Anspruch 10, in welcher der Kautschuk ausgewählt ist aus der Gruppe bestehend aus Dienkautschuken, Dienblockkautschuken, Butylkautschuken, Ethylen-Propylen-Kautschuken, Ethylen-Propylen-Dienmonomer-Kautschuken, Ethylencopolymerkautschuken, Acrylatkautschuken, Polyisoprenkautschuken, halogenhaltigen Kautschuken und Slllconkautschuken.

13. Zusammensetzung nach Anspruch 10, In welcher der Kautschuk in einer Menge von weniger als 40 Gew.-%, bezogen auf das Gewicht des Polymers, vorhanden ist,

14. Zusammensetzung nach Anspruch 7, in welcher das Polymer ein Allzweckpolystyral ist.

15. Zusammensetzung nach Anspruch 10, in welcher das Polymer schlagfestes Polystyrol ist.

16. Zusammensetzung nach Anspruch 10, in welcher das Polymer ABS ist.

17. Zusammensetzung nach Anspruch 7, In welcher das Polymer SAN ist,

18. Gegenstand hergestellt aus der Zusammensetzung nach Anspruch 1.

19. Gegenstand nach Anspruch 19, der durch Extrusion, Formpressen oder Thermoformen gebildet ist.

20. Zusammensetzung nach Anspruch 1, die durch Polymerisieren von aromatischen Monovinylidenmonomeren in Gegenwart eines Welchmachers, der das nichtfunktionelle nichtmineralische Öl enthält, gebildet ist.

## Revendications

1. Composition comprenant :
i) un polymère de composé monovinylidène-aromatique,
ii) et au moins 0,1 %, en poids rapporté au poids du polymère, d'un plastifiant comprenant une huile minérale et une huile non-minérale et non-fonctionnalisée qui présente un indice d'iode inférieur à 120 et un indice d'hydroxyle inférieur à 20, lequel plastifiant contient moins de 0,1 % en poids, par rapport au polymère, d'huile non-minérale fonctionnalisée.

2. Composition conforme à la revendication 1, dans laquelle l'huile non-minérale et non-fonctionnalisée se trouve présente en une proportion d'au moins 0,5 %, en poids rapporté au poids du polymère.

3. Composition conforme à la revendication 1, dans laquelle l'huile non-minérale présente un indice d'iode qui vaut de 20 à 115.

4. Composition conforme à la revendication 1, dans laquelle l'huile non-minérale comprend une huile végétale.

5. Composition conforme à la revendication 1, dans laquelle l'huile non- minérale constitue 50 % en poids du plastifiant ou plus.

6. Composition conforme à la revendication 4, dans laquelle l'huile végétale comprend de l'huile dérivée d'au moins l'une des matières végétales suivantes : arachides, graines de coton, olives, navette, tournesol oléique, palme et maïs.

7. Composition conforme à la revendication 1, dans laquelle le polymère comporte des motifs dérivés d'un monomère monovinylidène-aromatique de formule 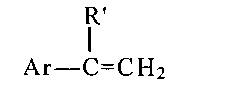 dans laquelle R' représente un atome d'hydrogène ou un groupe méthyle et Ar représente une structure cyclique aromatique qui comporte 1 à 3 cycles aromatiques.

8. Composition conforme à la revendication 7, dans laquelle Ar représente un groupe phényle ou alkyl-phényle où le groupe alkyle porté par le cycle phényle comporte 1 à 10 atomes de carbone.

9. Composition conforme à la revendication 8, dans laquelle le groupe alkyle porté par le cycle phényle comporte 1 à 4 atomes de carbone.

10. Composition conforme à la revendication 1, dans laquelle le polymère de composé monovinylidène-aromatique est mélangé ou greffé à au moins un caoutchouc

11. Composition conforme à la revendication 10, dans laquelle le caoutchouc présente une température de transition vitreuse qui n'est pas supérieure à 0 °C.

12. Composition conforme à la revendication 10, pour laquelle le caoutchouc est choisi dans l'ensemble formé par les suivants : caoutchoucs de diène, caoutchoucs à blocs de diène, caoutchouc butyl, caoutchoucs d'éthylène-propylène, caoutchoucs d'éthylène-propylène-(monomère diène), caoutchoucs copolymères d'éthylène, caoutchoucs d'acrylate, caoutchoucs de type polyisoprène, caoutchoucs halogénés, et caoutchoucs de silicone.

13. Composition conforme à la revendication 10, dans laquelle le caoutchouc se trouve présent en une proportion inférieure à 40 %, en poids rapporté au poids du polymère.

14. Composition conforme à la revendication 7, dans laquelle le polymère est un polystyrène pour usage général.

15. Composition conforme à la revendication 10, dans laquelle le polymère est un polystyrène à haute résistance au choc.

16. Composition conforme à la revendication 1, dans laquelle le polymère est un ABS (acrylonitrile/butadiène/styrène).

17. Composition conforme à la revendication 1, dans laquelle le polymère est un SAN (styrène/acrylonitrile).

18. Article fait d'une composition conforme à la revendication 1.

19. Article conforme à la revendication 19, fabriqué par extrusion, moulage ou thermoformage.

20. Composition conforme à la revendication 1, formée par polymérisation de monomère monovinylidène-aromatique en présence d'un plastifiant comprenant l'huile non-minérale et non-fonctionnalisée.
